(19) Europäisches Patentamt
European Patent Office
Office européen des brevets

(11) EP 0 822 209 B1

(12) EUROPEAN PATENT SPECIFICATION

(45) Date of publication and mention of the grant of the patent:
**04.02.2004 Bulletin 2004/06**

(51) Int Cl.[7]: **C08G 18/50**, A41G 5/00

(21) Application number: **97112700.6**

(22) Date of filing: **24.07.1997**

# (54) Use of a fluorinated polyurethane for prosthesis

Verwendung von fluoriertem Polyurethan für Prothesen

Utilisation d'un polyurethanne fluoré pour des prothèses

(84) Designated Contracting States:
**DE FR GB IT**

(30) Priority: **01.08.1996 IT MI961659**

(43) Date of publication of application:
**04.02.1998 Bulletin 1998/06**

(73) Proprietor: **Solvay Solexis S.p.A.**
**20121 Milano (IT)**

(72) Inventors:
- **Tonelli, Claudio**
  **Concorezzo, Milano (IT)**
- **Trombetta, Tania Regina**
  **Sovico, Milano (IT)**
- **Gramellini, Ermes**
  **Castelfranco Emilia, Modena (IT)**

(74) Representative: **Sama, Daniele, Dr. et al**
**Sama Patents,**
**Via G.B. Morgagni, 2**
**20129 Milano (IT)**

(56) References cited:
**EP-A- 0 359 273**
**DE-A- 19 509 486**
**IT-B- 1 200 177**
**US-A- 4 094 911**

- **DATABASE WPI Week 9304 Derwent Publications Ltd., London, GB; AN 033020 XP002058119 YAMAMOTO: "WIG SIMULATE REAL HAIR" & JP 04 361 604 A (YAMAMOTO)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 822 209 B1

## Description

The present invention relates to the use of fluorinated polyurethanes for the preparation of hair-prostheses.

As it is known the hair-prostheses at present employed also for aesthetic purposes are obtained by applying hairs on supports generally formed by plastic films or plastic cloths, or net or tulle cloths or knitted fabrics.

Such supports show drawbacks which limit the functionality and therefore also the aesthetic look of the prosthesis which must not be distinguishable from the normal hairs. Indeed the conformation given by the supports of the prior art utilized for prostheses results affected by imperfections and anyway it is only approximately conformable to the different skull shapes. Moreover the prostheses hairs result to unnaturally stick out from the support differently from the true hairs which have inclined junctions depending on the various zones of the skull.

In particular hydrogenated polyurethanes (PU) are at present utilized for prostheses, however their use does not allow to obtain materials at high chemical/biological resistance and to assure at the same time a high maintenance of the properties/performances during the time. Indeed, with supports based on said polymers, ageing and discoloration phenomena are observed due to chemical/biological attacks with consequent degradation of the polymeric structure. In particular the hydrogenated PUs have a poor resistance to steam from 30°C to 50°C for prolonged exposure times. Such conditions are the usual ones to which the prostheses in their normal utilization are subjected. Therefore the hydrogenated PUs show a decay of the performances also in limited times, not compatible with the expected performance of the prosthesis.

Prostheses utilizing supports based on hydrogenated PU are known in trade since various years, see for instance the Italian patent No. 1200177, which describes an improved process directed in particular to the obtainment of a prosthesis having superior aesthetic characteristics due to the particular method of the hairs fixing.

This patent has brought meaningful aesthetic improvements as regards the hairs trend but it does not give any indication on the types of support and therefore it does not allow to evaluate their duration. The problems concerning the use of hydrogenated PU have not found till now any solution and indication in the prior art.

Indeed the problems connected to the intrinsic faintness of the polymeric matrix, to the non optimal conformance to the skull conformation, to the unperfect imitability of the derma, to the variations of the elastic behaviour depending on the temperature, remain unsolved. Moreover the process for preparing prostheses described in the above mentioned Italian patent results long and onerous since it requires various steps for obtaining the prostheses and a final hot crosslinking of the same.

The Applicant has unexpectedly found a particular type of polymeric film which allows to solve the drawbacks indicated above.

Therefore an object of the present invention is the use, for the manufacture of hair prosthesis of fluorinated polyurethanes endowed with a particular combination of properties, for forming films by polymerization in situ on various kinds of supports, for instance polyurethanes, wood, metal and all the types of synthetic and natural polymers, etc.

In particular the Applicant has found a specific class of fluorinated polyurethanes which leads to an optimal combination of properties which makes it particularly suitable to the previously indicated employment. Such properties are:

- an excellent elasticity, which keeps also in the most severe environmental conditions (temperatures lower than 0°C);
- a combination of optimal mechanical properties in view of the above mentioned employment: an high stress and elongation at break combined to a not high hardness and elastic modulus and to an optimal elastic memory. Therefore the polymeric film of the invention is endowed at the same time with a very good flexibility and a high mechanical resistance, optimal chemical resistance towards acids, bases, oxidants, solvents, water, steam;
- very good filming and adhesion properties, absence of residual tackiness.

The combination of these properties allows to manufacture hair prostheses with a particular series of advantageous properties in comparison with those obtained with the normal known elastomeric hydrogenated polyurethanes or other well known elastomeric polymers, such as natural rubber, PVC, EP(DM), block copolymers SBS type, etc.

In particular the polymeric films of the invention show:

- capacity of registering in their elastic memory the support geometric shape, maintaining it over the time;
- polymer softness, in particular low hardness values (Shore A), which very faithfully simulates the human derma plasticity thus giving a perfect imitation of the derma itself;
- very good flexibility of the polymer which allows to obtain a very soft prosthesis easily following the skull shape on which it is applied giving a remarkable comfort feeling to the user;
- low Tg which allows the prosthesis to maintain flexibility also with very cold climates;
- optimal chemical resistance towards acids, bases, oxidants, solvents, water and steam making this polymer particularly resistant also in severe application conditions. The invention film surprisingly and unexpectedly resists all chemical products which the human body expels with the perspiration:
there are no discoloration and degradation phenomena of the polymer in short times as instead it happens for the hydrogenated polyurethanes described in the art. Moreover the film of the invention resists also optimally the surfactants and the normal products used for the hairs treatment. It is therefore possible to dye the prosthesis hairs without the film assumes the dye coloration;

- improved mechanical resistance of the hair fixed in the film and reduction of the hair breaking phenomena owing to repeated bendings and other mechanical stresses which are partly absorbed by the film.

The combination of these properties allows to manufacture hair prostheses having superior characteristics such as better aesthetic yield, a good imitation of the derma plasticity such as to make them not easily distinguishable in the usual utilization conditions (for instance to the touch and to the combing); high comfort and superior durability in comparison with the prostheses described in the art, also in the order of some years compared with the few months of those of the prior art.

The class of fluorinated polyurethanes of the present invention is obtainable starting from the following components:

A) one or more fluorinated diisocyanates or polyisocyanates with number average moelcular weight comprised between 500 and 7,000 having the following formula:

$$((OCN)_n R)_z -(Z^1)_d-Q-(Z^1)_d-(R(NCO)_q)_z \qquad (I)$$

wherein

$Z^1$ is a bivalent or trivalent radical selected from the group -CONH-, $-CH_2-$, $-CH_2O-$, $-CH_2OCH_2-$, -O-, $-CH_2OSO_2-$, $-CH_2O-CONH-$, $-CH_2O(CH_2CH_2O)_1$, $-CH_2O(CH_2CH_2O)_1CONH-$, wherein 1 is an integer comprised between 1 and 10, preferably between 1 and 3;

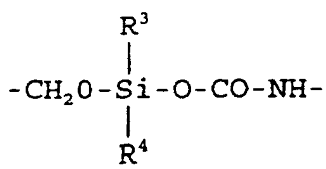

wherein $R^3$ and $R^4$, equal to or different from each other, are alkylic radicals having from 1 to 4 carbon atoms;

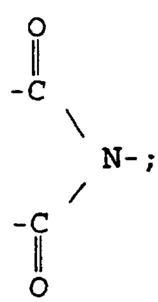

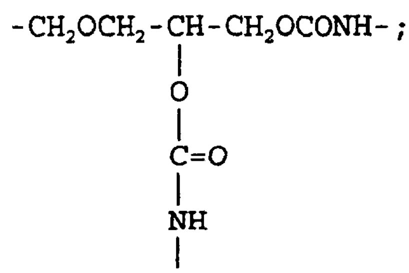

R is a aromatic, cycloaliphatic bivalent or polyvalent radical having from 6 to 20 carbon atoms, or aliphatic having from 2 to 20 carbon atoms, or a combination of said groups, with the proviso that when the radical $Z^1$ is

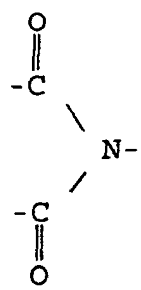

R is an aromatic radical;
d is an integer equal to 0 or 1;
z is equal to 1 when d=0 and is equal to 2 when $Z^1$ is a trivalent radical;
n and q are integers such that

$$(n \cdot z) \quad \text{and} \quad (q \cdot z)$$

equal to or different from each other, are integers comprised between 0 and 2;
and such that

$$(n \cdot z) + (q \cdot z)$$

is an integer comprised between 2 and 4;
Q is a perfluoropolyethereal or fluoropolyethereal chain comprising the following repeating units:
$(CF_2CF_2O)$, $(CFXO)$ wherein X is equal to F, $CF_3$; $(CF_2(CF_2)_{v'}O)$ wherein v' is an integer equal to 2 or 3; $(CF_2CF(OR_f)O)$, $(CF(OR_f)O)$ wherein $R_f$ is equal to $-CF_3$, $-C_2F_5$, $-C_3F_7$; $(OCF_2-CF_2-CR'R'')$ wherein R' and R'', equal to or different from each other, are H, Cl, perfluoroalkyl $C_1$-$C_3$, $(CF_2-CF(CF_3)O)$, $(CF(CF_3)CF_2O)$.

The following Q can be in particular mentioned as preferred:

1) $-CF_2-O-(C_2F_4O)_m(CF_2O)_p-CF_2-$
wherein the units $(C_2F_4O)$ and $(CF_2O)$ are randomly distributed along the chain; m and p are integers such that m/p is comprised between 0.2 and 4, preferably 0.5-2.0, the molecular weight being such as to give the values indicated above for component A) ;

2) $-CF_2-CH_2-(OCF_2-CF_2-CH_2)_r-O-R^1-O-(CH_2-CF_2-CF_2O)_s-CH_2-CF_2-$
wherein the repeating units are randomly distributed along the chain, $R^1$ is a fluoroalkylenic radical containing from 1 to 10 carbon atoms; r and s are integers such that the r/s is comprised between 0.8 and 1.2; the molecular weight being such as to give the values indicated above for component A);

3) $-CF_2-(CF_2-CF(CF_3)O)_t(C_2F_4O)_u$ and $(CFXO)_v-CF_2-$
wherein the repeating units are randomly distributed along the chain, X has the above mentioned meaning; t, u and v are integers such that t/u = 0.6 - 2.0; u/v is higher than 10; the molecular weight being such as to give the values indicated above for component A);

4) $-CF(CF_3)-(OCF_2-CF(CF_3))_c-OCF_2-R^1-CF_2O-(CF(CF_3)-CF_2O)_f-CF(CF_3)-$
wherein the repeating units are randomly distributed along the chain, $R^1$ has the meaning indicated above, c and f are integers such that c/f=0.8 - 1.2; the molecular weight being such as to give the values indicated above for.component A);

5) $-O(CF_2CF_2O)_{c'}(CF_2O)_{d'}(CF_2(CF_2)_{z'}CF_2O)_{h'}-$
wherein the repeating units are randomly distributed along the chain; c', d' and h' are such integers that c'/d' is comporised between 0.1 and 10; h'/(c'+d') is comprised between 0 and 0.05; z' is an integer equal to 1 or 2, the molecular weight being such as to give the values indicated above for component A);

6) $-O(CF_2O)_{j'}(CF_2CF(OR_f)O)_{k'}(CF(OR_f)O)_{l'}-$
wherein the repeating units are randomly distributed along the chain,; $R_f$ has the meaning indicated above; j', k',l' are integers such that k'+l' and j'+k'+l' are at least equal to 2; k'/(j'+l') is comprised between 0.01 and 1000; l'/j' is comprised between 0.01 and 100; the molecular weight being such as to give the values indicated above for

the component A);

7) $-O(CF_2(CF_2)_{z'}CF_2O)_{s'}-$

wherein s' is an integer such as to give the molecular weight indicated above; z' has the meaning already defined;

8) $-(OCR'R''CF_2CF_2)_{p''}-O-R^2-O-(CR'R''CF_2CF_2O)_{q''}-$

wherein the repeating units are randomly distributed along the chain; R', R'', $R^1$ have the meaning indicated above; q'' and p'' being integers such that the molecular weight is that indicated above.

These compounds and the methods for preparing them are described in the patents: GB 1,104,482, USP 3,242,218, USP 3,665,041, USP 3,715,378, USP 3,665,041, EP 148,482, USP 4,523,039 and USP 5,144,092;

B) one or more fluorinated diols or polyols having number average molecular weight from 400 to 7000, having the following formula:

$$(HO)n_3R-(Z^2)_d-(Z^3)_d-Q-(Z^3)_d(Z^2)_d-R(OH)q_3 \qquad (VI)$$

wherein $Z^2$ and $Z^3$, equal to or different from each other, are bivalent radicals selected from the group: -CONH-, $-CH_2-$, $-CH_2O-$, $-CH_2OCH_2-$, -O-, $-CH_2OSO_2-$, $-CH_2O-CONH-$, $-CH_2OCH_2-CONH-$, $-CH_2(OCH_2CH_2)_1-$ wherein 1 is an integer comprised between 1 and 10; preferably between 1 and 3,

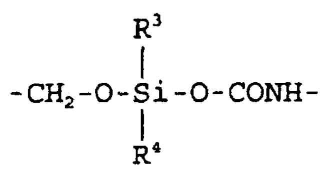

wherein $R^3$ and $R^4$, equal to or different from each other, are alkylic radicals having from 1 to 4 carbon atoms or $Z^2$-$Z^3$ represent the radical

$-CHOH-CH_2OCH_2-$; R, Q and d have the meaning previously indicated; $n_3$ and $q_3$ equal to or different from each other are integers comprised between 0 and 2 such that $n_3 + q_3$ has a value comprised between 2 and 4; eand such that

$$(n \cdot z)\ (\text{of comp. A}) + (q \cdot z)\ (\text{of comp. A}) + n_3 + q_3$$

have a value comprised between 5 and 8, preferably of at least 6;

C) optionally hydrogenated diols or polyols, for instance of the classes typically utilized as chain extenders and crosslinking agents in the chemistry of hydrogenated polyurethanes. Ethyleneglycol, 1,3-propyleneglycol, 1,4-butyleneglycol, trimethylolpropane, trimethylolethane, glycerin, 1,2,6-hexantriol, pentaerythrol, polyethyleneglycol, polypropyleneglycol, polybutyleneglycol or polyesters polyols known in the art can for instance be mentioned;

the obtained polymer by reacting A) with B), optionally with C), must be such as to have a hardness not higher than 50 Shore A, preferably not higher than 41.

The fluorinated polyurethanes of the present invention are crosslinked as it results from the fact that the sum of the indexes

$$(n \cdot z) + (q \cdot z) + n_3 + q_3$$

has a value comprised between 5 and 8, preferably of at least 6.

The fluorinated diisocyanates and polyisocyanates having the formula (I) are known as such; they are described, in particular, with their preparation method starting from alcohols, acids, esters and acyl halides, in USP 4,094,911.

The fluorinated diols and polyols having the formula (VI) are also known as such and are described, in particular, with their preparation method, see for instance the European patent application EP 665253 and USP 3,810,874.

The fluorinated polyurethanes used in the present invention are formed by one or more fluorinated di- or polyisocyanates and by fluorinated diols, or triols or tetraols optionally in admixture with each other, optionally with glycols or hydrogenated polyols as chain extenders (component C) indicated above).

In the starting polyisocyanates and polyols, the radical R is, as already said, bivalent or polyvalent. In the latter case it is usually trivalent. Among the radicals R the following ones can be mentioned:

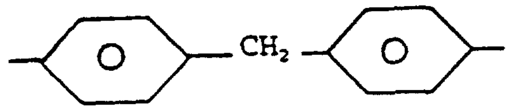

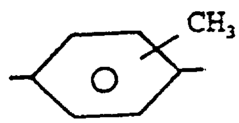

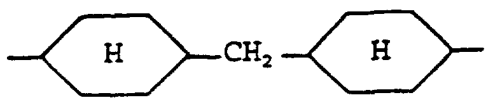

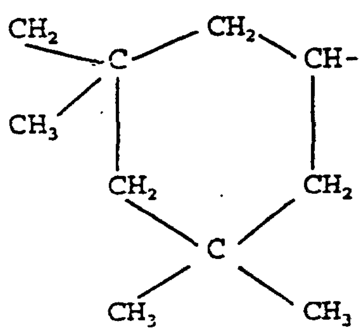
;
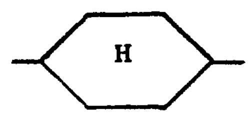

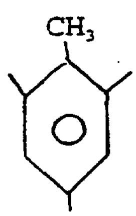
and
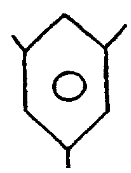

The optional free valences of the radicals R, that is those not bound to radicals $Z^1$, $Z^2$ or $Z^3$ or to functional groups -NCO and -OH are saturated by hydrogen atoms.

In the perfluoropolyethereal chain of formula 1) the m/p ratio is preferably comprised between 0.5 and 2.0.

In the fluoropolyethereal chain of formula 2) and 4), $R^1$ is preferably a fluoroalkylenic radical containing from 1 to 4 carbon atoms.

The process for the manufacture of hair prostheses according to the present invention comprises:

- preparation of a plaster mould of the user's skull,
- moulding in said plaster mould with a semirigid hydrogenated PU, known in the art, to reproduce the morphology of the user's skull (hereinafter defined model);
- mounting of an elastic material, e.g. nylon or silk tulle stockings;

- casting on said model of a thin layer of fluorinated polyurethane resin of the invention so as to carry out a cap having a width corresponding to the part of the head to be covered;
- detachement of said cap from the model for trimming of the elastic material;
- replacement of the cap on the model;
- fixing of the hairs on said cap by means of a proper microneedle in an oblique way corresponding to that of the hair juncture in the different zones of the scalp;
- overturning of said cap so as to turn outside the roots of said directed hairs;
- spreading on said directed roots of a layer of the fluorinated resin of the invention for fixing;
- application inside a suitable lining with pheriferic hairs fitting;
- polymerization of the so performed prosthesis.

The preparation of the fluorinated polyurethane is carried out directly on the material to be covered. The two components A) and B), optionally C), are mixed and are spread on the material by conventional techniques, for instance spreading, spraying or immersion of the material in the mixture of two components. Crosslinking can be carried out without catalyst, by heating for instance at 100-150°C for 2-24 hours. The use of a catalytic system allows to operate at lower temperatures, for instance at 20-80°C and for shorter times. As catalysts, those commonly employed in the preparation of polyurethanes can be used, for instance tin complexes, such as dibutyltin dilaurate, and iron complexes, such as iron acetylacetonate and tertiary amines.

The equivalent ratio NCO/OH in the starting mixture is commonly comprised between 1.00 and 1.30; preferably a ratio equal to 1.00 is used.

Some of the properties of the fluorinated PU of the present invention such as the high elastic memory combined with low hardness values lower than or equal to 50 Shore A, preferably lower or equal to 41, allow a significant simplication of the prosthesis constructive process. With the process phases indicated above indeed some constructive phases of the processes of the art are eliminated, with consequent decrease of the production costs.

Indeed with respect to what described in patent 1200177 regarding the application procedure, with the utilization of the fluorinated resins a meaningful decrease of the processing phases for obtaining the prosthesis is obtained. In particular, thanks to the high elastic memory of the resin itself, which allows to the grafted hair to maintain the junction direction also on relatively low film thicknesses, it is possible to carry out the implantation by eliminating the utilization of the layer of the spongy material necessary instead in the mentioned patent and there is consequently an elimination of two phases of the production process:

- positioning of the film on the sponge and - separation of the grafted film from the sponge. Also for this reason the Italian patent mentioned above does not describe and at any rate does not contemplate the use of fluorinated polyurethanes.

Moreover with the fluorinated resins of the present invention a further step of polymerization in oven is not necessary, since the polymerization can occur also at room temperature.

The following examples are to be considered for illustrative purposes and cannot be considered as limitative of the scope of the present invention.

## EXAMPLES

Preparation part

### EXAMPLE 1

In a 250 ml flask equipped with a mechanical stirrer 50 g of component A) (formula VII) having equivalent weight of 1219, equal to 41 meq of NCO. Then 22 g of component B) (formula VIII) having equivalent weight 537, equal to 41 meq of OH are added under stirring. It is left under stirring under vacuum at 60°C for 2 minutes. Then it is discharged in a mould and the polymerization is completed in a press at 130°C for 7 h.

The component (A) has for formula:

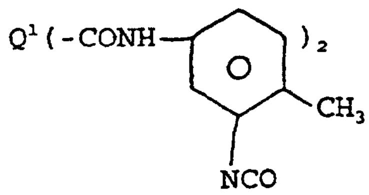

(VII)

wherein $Q^1$ is a perfluoropolyethereal chain according to formula 1) with m/p ratio equal to 1.0 and having number average molecular weight equal to 2,000.

Component (B) has for formula:

$$Q^1(CH_2OCH_2\text{-}CHOH\text{-}CH_2OH)_2 \qquad (VIII)$$

wherein $Q^1$ has the meaning indicated above.

The so obtained plate is subjected to mechanical and chemical/physical characterization, giving the following results:

| | |
|---|---|
| Hardness (Shore A) (ASTM D2240) | 39 |
| Brittle point (ASTM D746) | -114°C |
| Elongation at break at 23°C (ASTM D1708) | 337% |
| Modulus at 20% at 23°C (ASTM D1708) | 17.5 kg/cm$^2$ |
| Modulus at 100% at 23°C (ASTM D1708) | 8.0 kg/cm$^2$ |
| Stress at break at 23°C (ASTM D1708) | 38 kg/cm$^2$ |
| Contact angle at room temperature | |
| with water | 92° |
| with hexadecane | 55° |
| Volume resistivity (ASTM D257) | $10^{13}$ Ohm. cm |
| Dielectric rigidity (ASTM D149) | 26.4 KV/mm |
| Dielectric constant (ASTM D150) | 4.4 |
| Specific weight (**g/cc**) | 1.722 |

EXAMPLE 2

50 g of component A) of formula (IX) of equivalent weight 1,174, equal to 43 meq of NCO, with 23.1 grams of component B) of formula (VIII), (see example 1), of equivalent weight 537, equal to 43 meq of OH.

Component A) has the formula:

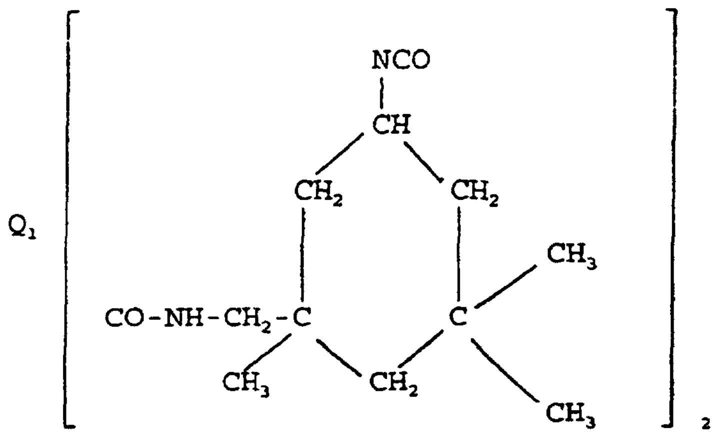

IX

wherein $Q^1$ has the meaning indicated in example 1.

It is left under stirring under vacuum at 60°C for 2 minutes, then it is poured in a mould and the polymerization is completed in a press at 130°C for 7 h thus obtaining an elastomer having the following characteristics:

| | |
|---|---|
| Hardness (Shore A) | 40 |
| Brittle point | -113°C |
| Elongation at break at 23°C | 350% |
| Modulus at 20% at 23°C | 19.0 $kg/cm^2$ |
| Modulus at 100% at 23°C | 9.1 $kg/cm^2$ |
| Stress at break at 23°C | 41.2 $kg/cm^2$ |
| Contact angle at room temperature | |
| with water | 94° |
| with hexadecane | 61°. |

**EXAMPLE 3**

40 g of component A) having the following formula:

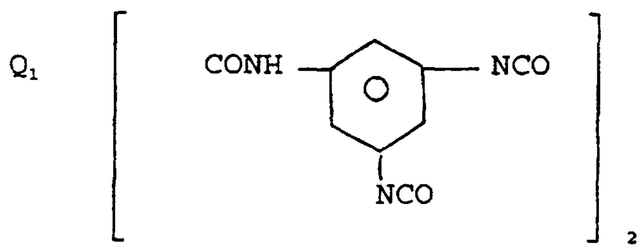

are reacted (wherein $Q^1$ has the meaning indicated in Example 1), of equivalent weight 1,202 equal to 66 meq of NCO with 71 g of diol of equivalent weight 1,075 (equal to 66 meq of OH) and having the formula:

$$Q^1(CH_2OCH_2\text{-}CH_2OH)_2 \quad (XI)$$

wherein $Q^1$ has the meaning indicated in Example 1.

**EXAMPLE 4A (comparative)**

A terminated prepolymer NCO is prepared by reacting PPG (polypropyleneglycol) PM 2000 and MDI (methylendiphenylendiisocyanate) in ratio NCO/OH 3.75.
Said prepolymer is polymerized with ethylene glycol ratio NCO/OH 1.05, in this phase a tin-based catalyst is utilized.

**EXAMPLE 4 (comparative)**

A prosthesis was prepared according to Italian patent 1200177 by utilizing the hydrogenated PU as prepared in Example 4A.
The mixture of Example 4A is applied on the model of the skull shape to form a film having a thickness of 0.5-1.5 mm to cover all the zone corresponding to the baldness and polymerized at room temperature until the consistency of an elastic film is obtained.
Said film is transferred on a spongy support and the combination of the two films (sponge and film PV-H) is applied again on the model and fixed. At this point it is possible with a microneedle to carry out the hairs application by respecting in the different zones the inclination by which the true hairs are fixed in the scalp.
Then the spongy layer with the film attached thereto is removed from the model and then the film with the grafted hairs is separated from the spongy layer.
The film with the combed hairs is turned out and applied again on the model, so as to turn outside the roots which are then trimmed at an uniform height of 3-4 mm. On the turned out cap a layer of hydrogenated PU as prepared in Example 4A is spread and the roots are immersed in this adhesive layer. It is polymerized at room temperature from 12 to 48 hours and the so prepared prosthesis is removed by turning it out again on the cap.
After suitable trimming operations the prosthesis is put in oven at 40-100°C for 4-24 hours in order to complete the resin polymerization.
The so obtained prosthesis applied to the customer shows good aesthetic characteristics, but its consistency and surface characteristics not similar to the derma combined with its rigidity make the comfort of the same not optimal.
Moreover the sensation to the combing is not natural, the behaviour to the hair dyes is such as to cause the presence of undesired residues of colouration due to the absorption from the polymer of the utilized dyes.
The prosthesis applied on customers with particular sweat problems often shows discolouration and degradation phenomena of the polymer in short times (few months) with consequent loss of the elastic/mechanical properties.

**EXAMPLE 5**

A prosthesis was prepared according to a semplified procedure with respect to what described in Italian patent 1200177 by utilizing fluorinated PU. The process contemplates the preparation of a terminated NCO prepolymer by reacting a fluorinated polyol Z DOL 3000 (PM 3200) (the perfluoropolyethereal structure is that reported in 1)) and IPDI (isophorondiisocyanate) in the ratio NCO/OH 2 to 1. This terminated NCO prepolymer (component A)) is polymerized with the following mixture of Z DOL 2000 (comp. B)), Z Tetraol 2000 (comp. B)), 1,4-butandiol (comp. C)) and catalyst in the following ratios: Z DOL 2000 (1 eq.), Z Tetraol 2000 (2 eq.) and 1,4-butandiol (0.5 eq) so that the global ratio NCO/OH is equal to 1.

**EXAMPLE 5A**

The mixture of isocyanic prepolymer and fluorinated and hydrogenated diols and polyols, as obtained in Example 5, is spread, still in liquid phase, on the model of the skull conformation, to form a film having a thickness of 0.5-1.5 mm covering all the zone corresponding to the baldness.
Such a film is let polymerize at room temperature until an elastic consistency is achieved, on said film, without taking it from the model, it is possible by microneedle to carry out the hairs application by respecting in the different zones the inclination by which the true hairs are fixed in the scalp.
The utilization of these fluorinated polymers, thanks to their elastic memory, makes sure that the transplanted hair is well held so that it does not loose its direction, thus allowing to eliminate the use of the spongy layer thus semplifying the operation cycle by eliminating two operations.
The film with the applied hairs is turned out and applied again on the model so as to turn outside the roots which are then trimmed at the height of 3-4 mm. On the turned out cap a fluorinated PU layer similar for composition to that described above is spread, by immersing thereon the roots with inclination fit to the combing.
It is polymerized at room temperature from 12 to 48 hours, the so built prosthesis is removed by turning it out again on the cap for further 12-48 hours.

The so obtained prosthesis applied to the customer, after suitable trimming operations, shows very good aesthetic characteristics.

Indeed the extremely soft resin exactly copies the skull conformation of the customer even in the most complex and difficult cases, by producing a comfort feeling not obtainable with the polymers described in Examples 4 and (4A).

The fluorinated resin moreover appears to the touch with a consistency very similar to that of the human derma, by making the prosthesis more verisimilar.

In the hygiene operations, such as hair brushing or combing, the fluorinated resin, differently from the previous ones, does not appear rigid and does not produce sounds or sensations different from those of the human derma. Moreover the low Tg of the fluorinated polymer allows the prosthesis not to stiffen when the climate is particularly cold.

The prosthesis obtained with this polymer shows an optimal chemical resistance, resistance to surfactants and to the usual products utilized in the hair treatment; besides the chemical-biological products which the human body expels in perspiration, eliminating discoloration and degradation phenomena of the prosthesis itself, as well as to the dyes usually employed in hair dyes.

## Claims

**1.** Use for the manufacture of hair prosthesis of fluorinated polyurethanes forming films by wherein the fluorinated polyurethanes are obtainable by starting from the following components:

A) one or more fluorinated diisocyanates or polyisocyanates with number average molecular weight comprised between 500 and 7,000 having the following formula:

$$((OCN)_n\ R)_z\ \text{-}(Z^1)_d\text{-}Q\text{-}(Z^1)_d\text{-}(R(NCO)_q)_z \qquad \text{(I)}$$

wherein

$Z^1$ is a bivalent or trivalent radical selected from the group -CONH- , $-CH_2-$, $-CH_2O-$, $-CH_2OCH_2-$, -O-, $-CH_2OSO_2-$, $-CH_2O\text{-}CONH-$, $-CH_2O(CH_2CH_2O)_1$, - $CH_2O(CH_2CH_2O)_1CONH-$, wherein 1 is an integer comprised between 1 and 10, preferably between 1 and 3;

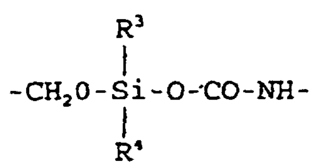

wherein $R^3$ and $R^4$, equal to or different from each other, are alkylic radicals having from 1 to 4 carbon atoms;

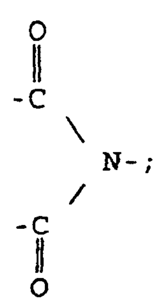

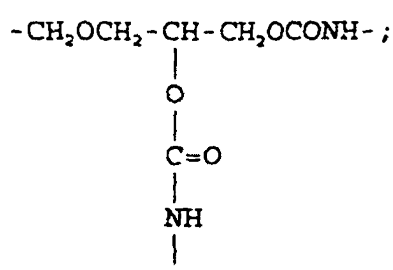

R is an aromatic, cycloaliphatic bivalent or polyvalent radical having from 6 to 20 carbon atoms, or aliphatic having from 2 to 20 carbon atoms, or a combination of said groups, with the proviso that when the radical $Z^1$ is

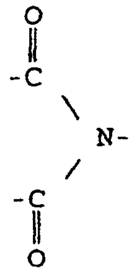

R is an aromatic radical;
d is an integer equal to 0 or 1;
z is equal to 1 when d=0 and is equal to 2 when $Z^1$ is a trivalent radical;
n and q are integers such that

$$(n \cdot z) \quad \text{and} \quad (q \cdot z)$$

equal to or different from each other, are integers comprised between 0 and 2;
and such that

$$(n \cdot z) + (q \cdot z)$$

is an integer comprised between 2 and 4;
Q is a perfluoropolyethereal or fluoropolyethereal chain comprising the following repeating units: $(CF_2CF_2O)$, (CFXO) wherein X is equal to F, $CF_3$; $(CF_2(CF_2)_{v'}O)$ wherein v' is an integer equal to 2 or 3 ; $(CF_2CF(OR_f)O)$, $(CF(OR_f)O)$ wherein $R_f$ is equal to $-CF_3$, $-C_2F_5$, $-C_3F_7$; $(OCF_2-CF_2-CR'R'')$ wherein R' and R'', equal to or different from each other, are H, Cl, perfluoroalkyl $C_1$-$C_3$, $(CF_2-CF(CF_3)O)$, $(CF(CF_3)CF_2O)$;
B) one or more fluorinated diols or polyols having number average molecular weight from 400 to 7000, having the following formula:

$$(HO)n_3R-(Z^2)_d-(Z^3)_d-Q-(Z^3)_d(Z^2)_d-R(OH)q_3 \qquad (VI)$$

wherein $Z^2$ and $Z^3$, equal to or different from each other, are bivalent radicals selected from the group: -CONH-, $-CH_2-$, $-CH_2O-$, $-CH_2OCH_2-$, -O-, $-CH_2OSO_2-$, $-CH_2O-CONH-$, $-CH_2OCH_2-CONH-$, $-CH_2(OCH_2CH_2)_1-$ wherein 1 is an integers comprised between 1 and 10; preferably between 1 and 3,

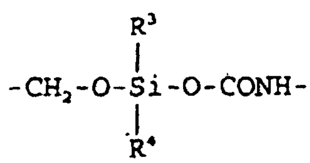

wherein $R^3$ and $R^4$, equal to or different from each other, are alkylic radicals having from 1 to 4 carbon atoms or $Z^2$-$Z^3$ represent the radical $-CHOH-CH_2OCH_2-$; R, Q and d have the meaning previously indicated; $n_3$ and $q_3$ equal to or different from each other are integers comprised between 0 and 2 such that $n_3 + q_3$ has a value comprised between 2 and 4; and such that $(n \cdot z)$ (of comp. A) + $(q \cdot z)$ (of comp. A) + $n_3 + q_3$ have a value comprised between 5 and 8, preferably of at least 6;
C) optionally hydrogenated diols or polyols,

wherein the polymer obtained by reacting A) with B), and optionally with C), must be such as to have a hardness not higher than 50 Shore A, preferably not higher than 41.

**2.** Use according to claim 1, wherein Q is selected among the following:

1) $-CF_2-O-(C_2F_4O)_m(CF_2O)_p-CF_2-$

wherein the units $(C_2F_4O)$ and $(CF_2O)$ are randomly distributed along the chain; m and p are integers such that m/p is comprised between 0.2 and 4, the molecular weight being such as to give the values indicated above for component A);

2) $-CF_2-CH_2-(OCF_2-CF_2-CH_2)_r-O-R^1-O-(CH_2-CF_2-CF_2O)_s-CH_2-CF_2-$

wherein the repeating units are randomly distributed along the chain, $R^1$ is a fluoroalkylenic radical containing from 1 to 10 carbon atoms; r and s are integers such that the r/s is comprised between 0.8 and 1.2; the molecular weight being such as to give the values indicated above for component A);

3) $-CF_2-(CF_2-CF(CF_3)O)_t(C_2F_4O)_u$ and $(CFXO)_v-CF_2-$ wherein the repeating units are randomly distributed along the chain, X has the above mentioned meaning; t, u and v are integers such that t/u = 0.6 - 2.0; u/v is higher than 10; the molecular weight being such as to give the values indicated above for component A);

4) $-CF(CF_3)-(OCF_2-CF(CF_3))_c-OCF_2-R^1-CF_2O-(CF(CF_3)-CF_2O)_f-CF(CF_3)-$

wherein the repeating units are randomly distributed along the chain, $R^1$ has the meaning indicated above, c and f are integers such that c/f=0.8 - 1.2; the molecular weight being such as to give the values indicated above for component A);

5) $-O(CF_2CF_2O)_{c'}(CF_2O)_{d'}(CF_2(CF_2)_{z'}CF_2O)_{h'}-$

wherein the repeating units are randomly distributed along the chain; c', d' and h' are such integers that c'/d' is comprised between 0.1 and 10; h'/(c'+d') is comprised between 0 and 0,05; z' is an integer equal to 1 or 2, the molecular weight being such as to give the values indicated above for component A);

6) $-O(CF_2O)_{j'}(CF_2CF(OR_{f'})O)_{k'}(CF(OR_{f'})O)_{l'}-$

wherein the repeating units are randomly distributed along the chain,; $R_{f'}$ has the meaning indicated above; j', k',l' are integers such that k'+l' and j'+k'+l' are at least equal to 2; k'/(j'+l') is comprised between 0.01 and 1000; l'/j' is comprised between 0.01 and 100; the molecular weight being such as to give the values indicated above for the component A);

7) $-O(CF_2(CF_2)_{z'}CF_2O)_{s'}-$

wherein s' is an integer such as to give the molecular weight indicated above; z' has the meaning already defined;

8) $-(OCR'R''CF_2CF_2)_{p''}-O-R^1-O-(CR'R''CF_2CF_2O)_{q''}-$

wherein the repeating units are randomly distributed along the chain; R', R'', $R^1$ have the meaning indicated above; q'' and p'' being integers such that the molecular weight is that indicated above.

**3.** Use according to claim 2, wherein Q has the structure:

1) $-CF_2-O-(C_2F_4O)_m(CF_2O)_p-CF_2-$

wherein the units $(C_2F_4O)$ and $(CF_2O)$ are randomly distributed along the chain; m and p are integers such that m/p is comprised between 0.5 and 2, the molecular weight being such as to give the values indicated above for the component A).

**4.** Use according to claims 1-3, wherein C) is selected from the conventional chain extenders and crosslinking agents of hydrogenated polyurethanes.

**5.** Use of fluorinated polyurethanes for forming films according to claim 4, wherein C) is selected among ethyleneglycol, 1,3-propyleneglycol, 1,4-butylenglycol, trimethylolpropane, trimethylolethane, glycerine, 1,2,6-hexantriol, pentaerythrol, polyethyleneglycol, polypropylenglycol, polybutyleneglycol or polyester polyols.

**6.** Use according to claims 1-5, wherein

$$(n \cdot z) + (q \cdot z) + n_3 + q_3$$

has a value comprised between 5 and 8, preferably at least 6.

**7.** Use according to claims 1-6, wherein R is selected from:

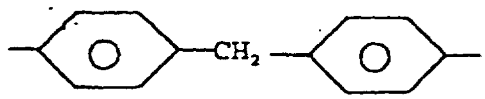

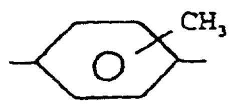

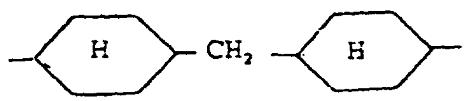

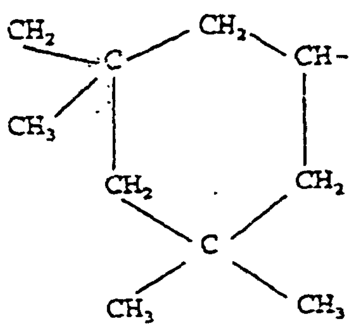

;

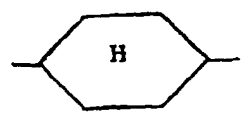

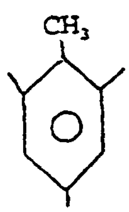

and

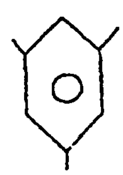

**8.** Use according to claims 1-7, wherein the fluorinated polyurethane has a hardness lower than or equal to 50 Shore A.

**9.** Use according to claim 8, wherein the hardness is lower than or equal to 41 Shore A.

**10.** Process for the manufacture of hair prostheses comprising the following steps:

- preparation of a plaster mould of the user's skull,
- moulding in said plaster mould with a semirigid hydrogenated PU, to reproduce the morphology of the user's skull (hereinafter defined model);
- mounting of elastic material, e.g. nylon or silk tulle stockings;
- casting on said model of a layer of fluorinated polyurethanes of claim 1 so as to carry out a cap having a width corresponding to the part of the head to be covered;
- detachement of said cap from the model for trimming of the elastic material;
- replacement of the cap on the model;

- fixing of the hairs on said cap by means of a proper microneedle in an oblique way corresponding to that of the hair juncture in the different zones of the scalp;
- overturning of said cap so as to turn outside the roots of said directed hairs;
- spreading on said directed roots of a layer of the fluorinated resin of claim 1 for fixing;
- application inside a lining with pheriferic hairs fitting;
- polymerization of the so performed prosthesis.

**11.** Process for the manufacture of hair prostheses according to claim 10 wherein the preparation of the fluorinated polyurethane directly takes place on the material to be covered, by mixing the two components A) and B), optionally C), spreading the mixture on the material, and crosslinking.

**12.** Process for the the manufacture of hair prostheses according to claim 11, wherein crosslinking is carried out by heating at 100-150°C for 2-24 hours, or in the presence of a catalytic system at temperatures from 20 to 80°C.

**Patentansprüche**

**1.** Verwendung von fluorierten Polyurethanen zum Bilden von Filmen durch Polymerisation auf Unterstützungen für die Herstellung von Haarprothesen, wobei die fluorierten Polyurethane erhältlich sind, ausgehend von den folgenden Bestandteilen:

A) ein oder mehrere fluorierte Diisocyanate oder Polyisocyanate mit einem Anzahl durchschnittlichem Molekulargewicht, das zwischen 500 und 7000 umfaßt ist, mit der folgenden Formel:

$$((OCN)_nR)_z-(Z^1)_d-Q-(Z^1)_d-(R(NCO)q)_z \qquad (I)$$

wobei

$Z^l$ ein bivalentes oder trivalentes Radikal ist, ausgewählt aus der Gruppe bestehend aus -CONH-, $-CH_2-$, $-CH_2O-$, -CH2OCH$_2$-, -O-, $-CH_2OSO_2-$, $-CH_2O-CONH-$,$-CH_2O(CH_2CH_2O)_1$, $-CH_2O(CH_2CH_2O)_1CONH-$, wobei 1 eine ganze Zahl ist, umfaßt zwischen 1 und 10, vorzugsweise zwischen 1 und 3;

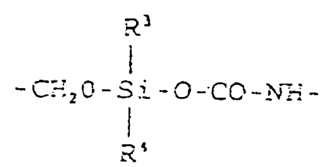

wobei $R^3$ und $R^4$ gleich oder unterschiedlich voneinander sind und Alkylradikale sind, mit von einem bis zu 4 Kohlenstoffatomen;

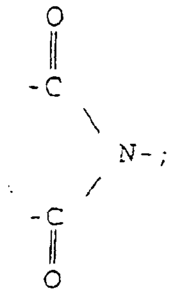

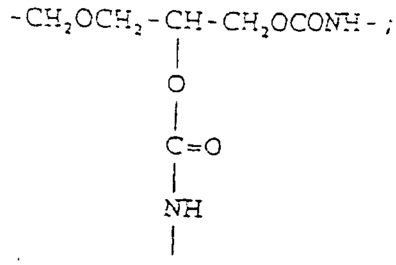

R ist ein aromatisches, cycloaliphatisches bivalentes oder polyvalentes Radikal mit von 6 bis zu 20 Kohlenstoffatomen, oder ein aliphatisches Radikal mit von 2 bis zu 20 Kohlenstoffatomen, oder eine Kombination aus diesen Gruppen mit der. Voraussetzung, daß, wenn das Radikal $Z^I$ ist,

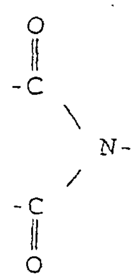

R ein aromatisches Radikal ist;
d eine ganze Zahl gleich 0 oder 1 ist;
z gleich 1, wenn d=0 und gleich 2 wenn $Z^I$ ein trivalentes Radikal ist;
n und q sind ganze Zahlen, so daß
$(n \cdot z)$ und $(q \cdot z)$
gleich oder unterschiedlich voneinander sind und ganze Zahlen sind, die zwischen 0 und 2 umfaßt sind; und so sind, daß

$$(n \cdot z) + (q . z)$$

eine ganze Zahl ist, die zwischen 2 und 4 umfaßt ist;
Q ist eine Perfluorpolyether- oder Fluorpolyetherkette, die die folgenden sich wiederholenden Einheiten umfaßt:

$(CF_2CF_2O)$, $(CFXO)$, wobei X gleich F, $CF_3$ ist;
$(CF2(CF2)_{v'}O$, wobei v'eine ganze Zahl ist, die gleich 2 oder 3 ist;
$(CF_2CF(OR_{f'})O)$,$(CF(OR_{f'})O)$, wobei $R_{f'}$ gleich $-CF_3$,$-C_2F_5$, $-C_3F_7$ ist; $(OCF_2-CF_2-CR'R'')$, wobei R' und R'' gleich oder unterschiedlich voneinander sind und H, Cl, Perfluoralkyl $C_1$-$C_3$, $(CF_2-CF(CF_3)O)$, $(CF(CF_3)CF_2O)$ ist;

B) ein oder mehrere fluorierte Diole oder Polyole mit einem Anzahl durchschnittlichem Molekulargewicht von 400 bis 7000 mit der folgenden Formel:

$$(HO)n_3R\text{-}(Z^2)_d\text{-}(Z^3)_d\text{-}Q\text{-}(Z^3)_d(Z^2)_d\text{-}R(OH)q_3 \qquad (VI)$$

wobei $Z^2$ und $Z^3$, gleich oder unterschiedlich voneinander sind und bivalente Radikale sind, die ausgewählt sind aus der Gruppe bestehend aus: -CONH-,$-CH_2-$, $-CH_2O-$, $-CH_2OCH_2-$, -O-, $-CH_2OSO_2-$, $-CH_2O-CONH-$,$-CH_2OCH_2-CONH-$, $-CH_2(OCH_2CH_2)_1-$, wobei 1 eine ganze Zahl ist, die zwischen 1 und 10 umfaßt ist; vorzugsweise zwischen 1 und 3 umfaßt ist,

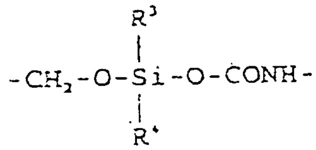

wobei $R^3$ und $R^4$ gleich oder unterschiedlich voneinander sind, alkylische Radikale mit von einem bis zu vier Kohlenstoffatomen sind oder $Z^2$-$Z^3$ repräsentieren das Radikal $-CHOH-CH_2OCH_2-$; R, Q und d haben die vorher bezeichnete Bedeutung; $n_3$ und $q_3$, gleich oder unterschiedlich voneinander, sind ganze Zahlen, die zwischen 0 und 2 umfaßt sind, so daß $n_3 + q_3$ einen Wert hat, der zwischen 2 und 4 umfaßt ist; und so daß $(n \cdot z)$ (der Verbindung A) + $(q \cdot z)$ (der Verbindung A) + $n_3 + q_3$ einen Wert haben, der zwischen 5 und 8 umfaßt ist, vorzugsweise von wengistens 6;

C) optional hydrierte Diole oder Polyole,

wobei das durch Umsetzen von A) mit B) und optional mit C) erhaltene Polymer so sein muß, daß es eine Härte hat, die nicht größer ist als 50 Shore-A, vorzugsweise nicht höher ist als 41.

**2.** Verwendung nach Anspruch 1, wobei Q ausgewählt ist aus dem folgenden:

1) $-CF_2-O-(C_2F_4O)_m(CF_2O)_p-CF_2-$
wobei die Einheiten $(C_2F_4O)$ und $(CF_2O)$ zufällig entlang der Kette verteilt sind; m und p ganze Zahlen sind, so, daß m/p zwischen 0,2 und 4 umfaßt ist, das Molekurgewicht so ist, daß es die Werte ergibt, die oben für den Bestandteil A) angegeben sind;

2) $-CF_2-CH_2-(OCF_2-CF_2-CH_2)_r-O-R^1-O-(CH_2-CF_2-CF_2O)_s-CH_2-CF_2-$, wobei die sich wiederholenden Einheiten zufällig entlang der Kette verteilt sind; $R^1$ ist ein Fluoralkylenradikal mit von einem bis zu 10 Kohlenstoffatomen; r und s sind ganze Zahlen, so daß r/s zwischen 0,8 und 1,2 umfaßt sind; das Molekulargewicht ist so, daß sich die Werte ergeben, die oben für den Bestandteil A) angegeben sind;

3) $-CF_2-(CF_2-CF(CF_3)O)_t(C_2F_4O)_u$ und $(CFXO)_v-CF_2-$,
wobei die sich wiederholenden Einheiten zufällig entlang der Kette verteilt sind, X die oben erwähnte Bedeutung hat; t, u und v ganze Zahlen sind, so daß t/u gleich 0,6 bis 2,0 ist; u/v größer ist als 10; das Molekulargewicht so ist, daß sich die Werte ergeben, die oben für den Bestandteil A) angegeben sind;

4) $-CF(CF_3)-(OCF_2-CF(CF_3))_c-OCF_2-R^1-CF_2O-(CF(CF_3)-CF_2O)_f-CF(CF_3)-$,
wobei die sich wiederholenden Einheiten zufällig entlang der Kette verteilt sind, $R^1$ die Bedeutung hat, die oben angegeben ist, c und f ganze Zahlen sind, so daß c/f gleich 0,8 bis 1,2 ist; das Molekulargewicht so ist, daß sich die Werte ergeben, die oben für den Bestandteil A) angegeben sind;

5) $-O(CF_2CF_2O)_{c'}(CF_2O)_{d'}(CF_2(CF_2)_{z'}CF_2O)_{h'}-$,
wobei die sich wiederholenden Einheiten zufällig entlang der Kette verteilt sind; c', d' und h' solche ganze Zahlen sind, daß c'/d' zwischen 0,1 und 10 umfaßt ist; h'/(c'+d') zwischen 0 und 0,5 umfaßt ist; z' eine ganze Zahl ist, die gleich 1 oder 2 ist, das Molekulargewicht so ist, daß sich die Werte ergeben, die oben für den Bestandteil A) angegeben sind;

6) $-O(CF_2O)_{j'}(CF_2CF(OR_{f'})O)_{k'}(CF(OR_{f'})O)_{l'}-$,

wobei die sich wiederholenden Einheiten zufällig entlang der Kette verteilt sind; $R_{f'}$ die Bedeutung hat, die oben angegeben ist; j', k' und l' ganze Zahlen sind, so daß k'+l' und j'+k'+l' wenigstens gleich 2 sind; k'/(j'+l') zwischen 0,1 und 1000 umfaßt sind; l'/j' zwischen 0,01 und 100 umfaßt ist; das Molekulargewicht so ist, daß sich die Werte ergeben, die oben für den Bestandteil A) angegeben sind;

7) $-O(CF_2(CF_2)_{z'}CF_2O)_{s'}-$,
wobei s' eine ganze Zahl ist, so daß sich das Molekulargewicht ergibt, das oben angegeben ist; z' hat die Bedeutung, die bereits definiert wurde;

8) $-(OCR'R''CF_2CF_2)_{p''}- O -R^1-O-(CR'R''CF_2CF_2O)_{q''}-$
wobei die sich wiederholenden Einheiten zufällig entlang der Kette verteilt sind; R', R'', $R^1$ die Bedeutung haben, die oben angegeben ist; q'' und p'' ganze Zahlen sind, so daß das Molekulargewicht das ist, das oben angegeben ist.

**3.** Verwendung nach Anspruch 2, wobei Q die Struktur:

1) $-CF_2-O- (C_2F_4O)_m (CF_2O)_p -CF_2-$ hat,
wobei die Einheiten $(C_2F_4O)$ und $(CF_2O)$ zufällig entlang der Kette verteilt sind; m und p ganze Zahlen sind, so daß m/p zwischen 0,5 und 2 umfaßt ist, das Molekulargewicht so ist, daß sich die Werte ergeben, die oben für den Bestandteil A) angegeben sind.

**4.** Verwendung nach Ansprüchen 1 bis 3, wobei C) ausgewählt ist aus konventionellen Kettenverlängerungen und Quervernetzungsmitteln aus hydrierten Polyurethanen.

**5.** Verwendung von fluorierten Polyurethanen zum Bilden von Filmen gemäß Anspruch 4, wobei C) ausgewählt ist aus Ethylenglycol, 1,3-Propylenglycol, 1,4-Butylenglycol, Trimethylolpropan, Trimethylolethan, Glycerin, 1,2,6-Hexantriol, Pentaerythrol, Polyethylenglycol, Polypropylenglycol, Polybutylenglycol oder Polyesterpolyolen.

**6.** Verwendung nach Ansprüchen 1 bis 5, wobei $(n \cdot z) + (q \cdot z) + n_3 + q_3$ einen Wert hat, der zwischen 5 und 8 umfaßt ist, vorzugsweise wenigstens 6 ist.

**7.** Verwendung nach Ansprüchen 1 bis 6, wobei R ausgewählt ist aus

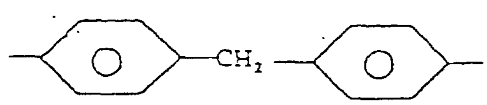

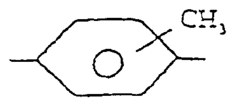

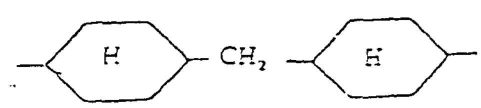

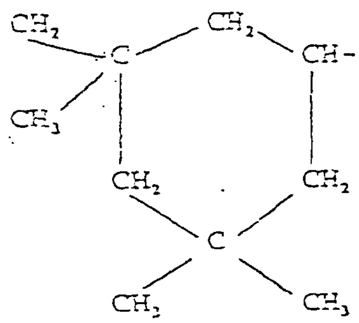 ; 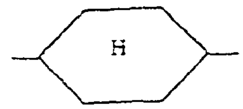

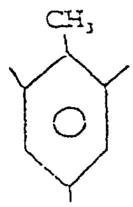 und 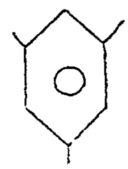

8. Verwendung nach Ansprüchen 1 bis 7, wobei das fluorierte Polyurethan eine Härte hat, die kleiner ist oder gleich 50 Shore-A ist.

9. Verwendung nach Anspruch 8, wobei die Härte kleiner oder gleich 41 Shore-A ist.

10. Verfahren für die Herstellung von Haarprothesen umfassend die folgenden Schritte:

- Herstellen einer Gipsform des Schädels des Anwenders,
- Ausformen der Pflasterform mit einem halbfesten hydrierten PU, um die Morphologie des Schädels des Anwenders zu reproduzieren (hiernach Modell benannt),
- Anbringen von elastischem Material, z.B. Nylon oder Seidentüllstrümpfen;
- Aufbringen einer dünnen Schicht aus fluroierten Polyurethanen nach Anspruch 1 auf das Modell, um so eine Haube auszuführen, die eine Breite aufweist, die dem Teil des Kopfes entspricht, der bedeckt werden soll;
- Ablösen der Haube aus dem Modell zum Beschneiden des elastischen Materials;
- Wiederaufbringen der Haube auf das Modell;
- Anbringen der Haare auf der Haube mittels einer entsprechenden Mikronadel in einer schrägen Art und Weise, die der der Haarverbindungspunkte in den unterschiedlichen Bereichen des Kopfes entspricht;
- Umkrempeln der Kappe, um so die Wurzeln der gerichteten Haare nach außen zu kehren;
- Verteilen einer Schicht des fluorierten Harzes nach Anspruch 1 zum Fixieren auf den gerichteten Wurzeln;
- inneres Anwenden einer Fütterung, wobei die peripheren Haare angepaßt werden;
- Polymerisierung der so ausgeführten Prothese.

11. Verfahren für die Herstellung von Haarprothesen gemäß Anspruch 10, wobei die Herstellung des fluorierten Polyurethans direkt auf dem Material, das bedeckt werden soll, stattfindet durch Mischen der zwei Komponenten A) und B) und optional C) , Verteilen der Mischung auf dem Material, und Quervernetzen.

12. Verfahren für die Herstellung von Haarprothesen gemäß Anspruch 11, wobei das Quervernetzen ausgeführt wird durch Erhitzen auf 100 bis 150°C für 2 bis 24 Stunden oder in der Gegenwart eines katalytischen Systems bei Temperaturen von 20 bis 80°C.

**Revendications**

1. Utilisation, pour la fabrication de prothèses capillaires, de polyuréthanes fluorés formant des films par polymérisation in situ sur des supports, dans laquelle on peut obtenir les polyuréthanes fluorés en partant des composants suivants :

A) un ou plusieurs diisocyanates ou polyisocyanates fluorés ayant une masse moléculaire moyenne en nombre comprise entre 500 et 7000, répondant à la formule suivante :

$$((OCN)_nR)_z\text{-}(Z^1)_d\text{-}Q\text{-}(Z^1)_d\text{-}(R(NCO)_q)_z \qquad \text{(I)}$$

dans laquelle
$Z^1$ est un radical divalent ou trivalent choisi dans le groupe -CONH-, $-CH_2-$, $-CH_2O-$, $-CH_2OCH_2-$, -O-, $-CH_2OSO_2-$, $-CH_2O\text{-}CONH-$, $-CH_2O(CH_2CH_2O)_1$, $-CH_2O(CH_2CH_2O)_1CONH-$, où 1 est un entier compris entre 1 et 10, de préférence entre 1 et 3 ;

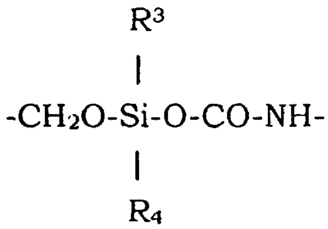

où $R^3$ et $R^4$, identiques ou différents l'un de l'autre, sont des radicaux alkvlioues avant de 1 à 4 atomes de carbone :

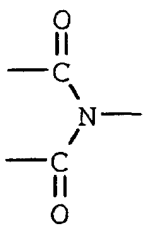 ; 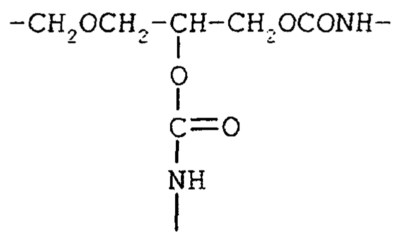

R est un radical aromatique, cycloaliphatique divalent ou polyvalent ayant de 6 à 20 atomes de carbone, ou aliphatique ayant de 2 à 20 atomes de carbone, ou une combinaison desdits groupes, à condition que, lorsque le radical $Z^1$ est

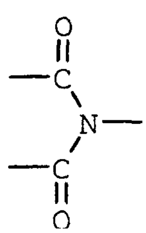

R est un radical aromatique ;
d est un entier égal à 0 ou 1 :
z vaut 1 quand d = 0 et z vaut 2 quand $Z^1$ est un radical trivalent ;
n et q sont des entiers tels que

$$(n \cdot z) \text{ et } (q \cdot z)$$

égaux ou différents l'un de l'autre, sont des entiers compris entre 0 et 2;
et tels que

$$(n \cdot z) + (q \cdot z)$$

est un entier compris entre 2 et 4 ;
Q est une chaîne perfluoropolyéthérée ou fluoropolyéthérée comprenant les motifs répétitifs suivants :

$(CF_2CF_2O)$, $(CFXO)$ où X est F, $CF_3$ ; $(CF_2(CF_2)_{v'}O)$ où v' est un entier égal à 2 ou 3 ; $(CF_2CF(OR_f)O)$, $(CF(OR_f)O)$ où $R_f$ est $-CF_3$, $-C_2F_5$, $-C_3F_7$ ; $(OCF_2\text{-}CF_2\text{-}CR'R'')$ où R' et R'', identiques ou différents l'un de l'autre, sont H, Cl, perfluoroalkyle en $C_1$ à $C_3$, $(CF_2\text{-}CF(CF_3)O)$, $(CF(CF_3)CF_2O)$ ;

B) un ou plusieurs diols ou polyols fluorés ayant une masse moléculaire moyenne en nombre de 400 à 7000, répondant à la formule suivante :

$$(HO)_{n3}R(Z^2)_d\text{-}(Z^3)_d\text{-}Q\text{-}(Z^3)_d(Z^2)_d\text{-}R(OH)_{q3} \qquad (VI)$$

dans laquelle $Z^2$ et $Z^3$, identiques ou différents l'un de l'autre, sont des radicaux divalents choisis dans le groupe : -CONH-, $-CH_2-$, $-CH_2O-$, $-CH_2OCH_2-$, -O-, $-CH_2OSO_2-$, $-CH_2O\text{-}CONH-$, $-CH_2OCH_2\text{-}CONH-$, - $CH_2(OCH_2CH_2)_1-$ où 1 est un entier compris entre 1 et 10, de préférence entre 1 et 3 ;

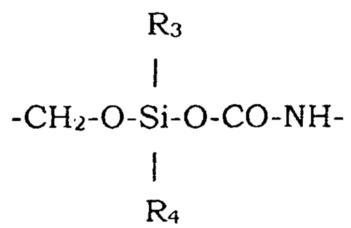

où $R^3$ et $R^4$, identiques ou différents l'un de l'autre, sont des radicaux alkyliques ayant de 1 à 4 atomes de carbone, ou bien $Z^2\text{-}Z^3$ représente le radical $-CHOH\text{-}CH_2OCH_2-$ ; R, Q et d ont la signification précédemment indiquée ; $n_3$ et $q_3$, identiques ou différents l'un de l'autre, sont des entiers compris entre 0 et 2 tels que $n_3 + q_3$ ait une valeur comprise entre 2 et 4 ; et tels que $(n \cdot z)$ (du composant A) + $(q \cdot z)$ (du composant A) + $n_3 + q_3$ ait une valeur comprise entre 5 et 8, de préférence d'au moins 6 ;
C) éventuellement des diols ou polyols hydrogénés,

dans laquelle le polymère obtenu par réaction de A) avec B), et éventuellement avec C), doit être tel qu'il ait une dureté Shore A non supérieure à 50, de préférence non supérieure à 41.

**2.** Utilisation selon la revendication 1, dans laquelle Q est choisi parmi ce qui suit :

1) $-CF_2\text{-}O\text{-}(C_2F_4O)_m(CF_2O)_p\text{-}CF_2-$
où les motifs $(C_2F_4O)$ et $(CF_2O)$ sont distribués de façon statistique le long de la chaîne ; m et p sont des entiers tels que m/p soit compris entre 0,2 et 4, la masse moléculaire étant telle qu'elle donne les valeurs indiquées ci-dessus pour le composant A) ;
2) $-CF_2\text{-}CH_2\text{-}(OCF_2\text{-}CF_2\text{-}CH_2)_r\text{-}O\text{-}R^1\text{-}O\text{-}(CH_2\text{-}CF_2\text{-}CF_2O)_s\text{-}CH_2\text{-}CF_2-$
où les motifs répétitifs sont distribués de façon statistique le long de la chaîne, $R^1$ est un radical fluoroalkylénique contenant de 1 à 10 atomes de carbone ; r et s sont des entiers tels que r/s soit compris entre 0,8 et 1,2 ; la masse moléculaire étant telle qu'elle donne les valeurs indiquées ci-dessus pour le composant A) ;
3) $-CF_2\text{-}(CF_2\text{-}CF(CF_3)O)_t(C_2F_4O)_u$ et $(CFXO)_v\text{-}CF_2-$
où les motifs répétitifs sont distribués de façon statistique le long de la chaîne, X a la signification mentionnée ci-dessus ; t, u et v sont des entiers tels que t/u = 0,6 - 2,0 ; u/v soit supérieur à 10 ; la masse moléculaire étant telle qu'elle donne les valeurs indiquées ci-dessus pour le composant A) ;
4) $-CF(CF_3)\text{-}(OCF_2\text{-}CF(CF_3))_c\text{-}OCF_2\text{-}R^1\text{-}CF_2O\text{-}(CF(CF_3)\text{-}CF_2O)_f\text{-}CF(CF_3)-$
où les motifs répétitifs sont distribués de façon statistique le long de la chaîne, $R^1$ a la signification indiquée ci-dessus, c et f sont des entiers tels que c/f = 0,8 - 1,2 ; la masse moléculaire étant telle qu'elle donne les valeurs indiquées ci-dessus pour le composant A) ;

5) $-O(CF_2CF_2O)_{c'}(CF_2O)_{d'}(CF_2(CF_2)_{z'}CF_2O)_{h'}-$
où les motifs répétitifs sont distribués de façon aléatoire le long de la chaîne ; c', d' et h' sont des entiers tels que c'/d' soit compris entre 0,1 et 10 ; h'/(c' + d') soit compris entre 0 et 0,05 ; z' est un entier égal à 1 ou 2, la masse moléculaire étant telle qu'elle donne les valeurs indiquées ci-dessus pour le composant A) ;
6) $-O(CF_2O)_{j'}(CF_2CF(OR_{f'})O)_{k'}(CF(OR_{f'})O)_{l'}-$
où les motifs répétitifs sont distribués de façon statistique le long de la chaîne ; $R_{f'}$ a la signification indiquée ci-dessus ; j', k' et l' sont des entiers tels que k' + l' et j' + k' + l' soient au moins égales à 2 ; k'/(j' + l') soit compris entre 0,01 et 1000 ; l'/j' soit compris entre 0,01 et 100 ; la masse moléculaire étant telle qu'elle donne les valeurs indiquées ci-dessus pour le composant A) ;
7) $-O(CF_2(CF_2)_{z'}CF_2O)_{s'}-$
où s' est un entier tel qu'il donne la masse moléculaire indiquée ci-dessus ; z' a la signification déjà définie ;
8) $-(OCR'R''CF_2CF_2)_{p''}-O-R^1-O-(CR'R''CF_2CF_2O)_{q''}-$
où les motifs répétitifs sont distribués de façon statistique le long de la chaîne ; R', R'', $R^1$ ont la signification indiquée ci-dessus ; q'' et p'' étant des entiers tels que la masse moléculaire soit celle indiquée ci-dessus.

**3.** Utilisation selon la revendication 2, dans lequel Q répond à la structure :

1) $-CF_2-O-(C_2F_4O)_m(CF_2O)_p-CF_2-$
où les motifs $(C_2F_4O)$ et $(CF_2O)$ sont distribués de façon statistique le long de la chaîne ; m et p sont des entiers tels que m/p soit compris entre 0,5 et 2, la masse moléculaire étant telle qu'elle donne les valeurs indiquées ci-dessus pour le composant A).

**4.** Utilisation selon les revendications 1-3, dans laquelle C) est choisi parmi les agents d'allongement de chaîne et les agents de réticulation conventionnels des polyuréthanes hydrogénés.

**5.** Utilisation de polyuréthanes fluorés pour former des films selon la revendication 4, dans laquelle C) est choisi parmi l'éthylèneglycol, le 1,3-propylèneglycol, le 1,4-butylèneglycol, le triméthylolpropane, le triméthyloléthane, le glycérol, le 1,2,6-hexanetriol, le pentaérythritol, le polyéthylèneglycol, le polypropylèneglycol, le polybutylèneglycol ou les polyester-polyols.

**6.** Utilisation selon les revendications 1-5, dans laquelle

$$(n \cdot z) + (a \cdot z) + n_3 + q_3$$

a une valeur comprise entre 5 et 8, de préférence d'au moins 6.

**7.** Utilisation selon les revendications 1-6, dans laquelle R est choisi parmi :

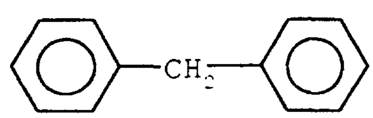

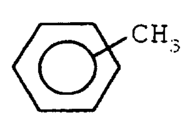

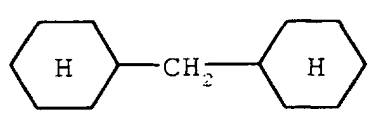

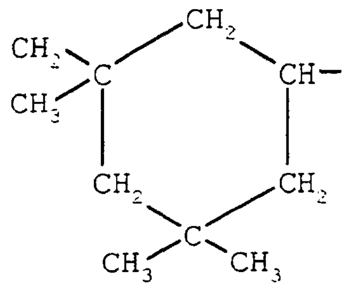

;

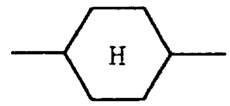

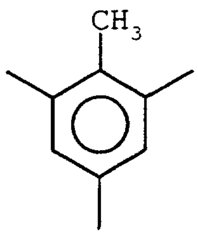

et

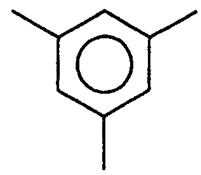

**8.** Utilisation selon les revendications 1-7, dans laquelle le polyuréthane fluoré a une dureté Shore A inférieure ou égale à 50.

**9.** Utilisation selon la revendication 8, dans laquelle la dureté Shore A est inférieure ou égale à 41.

**10.** Procédé pour la fabrication de prothèses capillaires, comprenant les étapes suivantes :

- préparation d'un moule en plâtre du crâne de l'utilisateur,
- moulage dans ledit moule en plâtre avec un PU hydrogéné semi-rigide, pour reproduire la morphologie du crâne de l'utilisateur (appelé ci-après "modèle") ;
- montage d'un matériau élastique, par exemple des bas en tulle de nylon ou de soie ;
- coulée sur ledit modèle d'une couche de polyuréthanes fluorés de la revendication 1 de façon à réaliser une coiffe ayant une largeur correspondant à la partie de la tête devant être recouverte ;
- détachement de ladite coiffe à partir du modèle pour l'ébavurage du matériau élastique ;
- redisposition de la coiffe sur le modèle ;
- fixation des cheveux sur ladite coiffe au moyen d'une micro-aiguille appropriée d'une manière oblique correspondant à celle de la jointure des cheveux dans les différentes zones du scalp ;
- renversement de ladite coiffe de façon que les racines desdits cheveux dirigés soient vers l'extérieur ;
- étalement sur lesdites racines dirigées d'une couche de la résine fluorée de la revendication 1 pour la fixation ;
- application à l'intérieur d'une doublure avec ajustement aux cheveux périphériques ;
- polymérisation de la prothèse ainsi réalisée.

**11.** Procédé pour la fabrication de prothèses capillaires selon la revendication 10, dans lequel la préparation du polyuréthane fluoré se fait directement sur le matériau devant être recouvert, par mélange des deux composants A) et B), et éventuellement C), étalement du mélange sur le matériau, et réticulation.

**12.** Procédé pour la fabrication de prothèses capillaires selon la revendication 11, dans lequel la réticulation est réalisée par chauffage à 100-150°C pendant 2-24 heures, ou en présence d'un système catalytique à des températures de 20 à 80°C.